# EUROPEAN PATENT APPLICATION

(11) **EP 4 549 492 A1**
(43) Date of publication of application: **07.05.2025**
(21) Application number: 23831488.4
(22) Date of filing: 28.06.2023
(51) Int. Cl.: C08J 3/12, B29B 7/84, B29B 9/06, B29K 29/00

(54) **MANUFACTURING METHOD FOR HYDRATED ETHYLENE-VINYL ALCOHOL COPOLYMER PELLET**

(30) Priority: 29.06.2022 JP 2022104292
(71) Applicant: Kuraray Co., Ltd., Kurashiki-shi, Okayama 710-0801 (JP)
(72) Inventor: NISHIDA, Naoto, 1087, Melsele (BE); JINDE, Akinori, Okayama-shi, Okayama 702-8601 (JP)
(74) Representative: Müller-Boré & Partner Patentanwälte PartG mbB
(86) International application number: PCT/JP2023/023915
(87) International publication number: WO 2024/005048

(57) **Abstract**

Provided is a manufacturing method for water-containing EVOH pellets, comprising a first step of introducing a water-containing EVOH with a water content W1 of 10 to 90 % by mass, into an extruder followed by melt kneading thereof, and a second step of cutting the water-containing EVOH extruded from the extruder to give water-containing EVOH pellets, wherein the extruder has a back slit; water is discharged through the back slit under reduced pressure by means of a pressure reducing device; a temperature of the water-containing EVOH extruded from the extruder is 80 to 120°C, and a water content W2 is 5 to 50 % by mass; and a ratio (W2/W1) of the water content W2 to the water content W1 is 0.2 or more and less than 1. According to such a manufacturing method, while suppressing elution of EVOH, water in the water-containing EVOH can be efficiently reduced that water-containing EVOH pellets can be produced with good productivity.

## Description

### Technical Field

The present invention relates to a manufacturing method for water-containing ethylene-vinyl alcohol copolymer pellets.

### Background Art

An ethylene-vinyl alcohol copolymer (hereinafter, sometimes abbreviated as "EVOH") is a polymer material which is excellent in oxygen shield, aroma retention, oil resistance, antistatic property, mechanical strength and so on, and is molded into films, sheets, vessels and so on for a variety of applications. EVOH is generally produced by copolymerizing ethylene with a vinyl ester such as vinyl acetate to give an ethylene-vinyl ester copolymer, which is then saponified in an organic solvent containing an alcohol in the presence of a saponification catalyst.

One known post-treatment method for a solution of EVOH in an alcohol obtained by saponification is to introduce the solution of EVOH in the alcohol into an apparatus, bring it into contact with water within the apparatus to replace the alcohol in the solution with water, reduce water in the water-containing EVOH let out from the apparatus, and then followed by cutting them to obtain water-containing EVOH pellets (Patent Literature 1).

Patent Literature 1 has described a manufacturing method for water-containing EVOH pellets comprising reducing water in a water-containing EVOH composition obtained by replacing an alcohol with water by means of a kneader having a discharge port for liquid, extruding it from a dice, and cutting it. Furthermore, Patent Literature 2 has described a manufacturing method for a water-containing EVOH comprising bringing a solution of EVOH in water/methanol into contact with water vapor to water-containing EVOH and kneading the water-containing EVOH by a twin-screw extruder (previous phrase) having a vent downstream (die side) of the inlet port to give a water-containing EVOH with a reduced water content.

### Citation List

### Patent Literature

Patent Literature 1: JP 2002-284811 A
Patent Literature 2: JP 2010-132881 A

### Summary of Invention

### Technical Problem

However, since EVOH is hydrophilic, these methods cannot sufficiently reduce a water content of the water-containing EVOH. Therefore, when a water-containing EVOH containing a large amount of water which has been extruded from an extruder, cutting defect may occur, leading to defective shape of water-containing EVOH pellets formed. Furthermore, when water in a water-containing EVOH is reduced, EVOH is eluted in water to be discharged, and thus may be discharged from a liquid discharge port of a kneader or a vent of a twin-screw extruder. With continuous operation, EVOH elution mark may be formed in a liquid discharge port or a vent, and if it is left for a long period of time, the liquid discharge port or the vent may be clogged, which may adversely affect production. Therefore, in order to suppress cutting defect and EVOH elution, operation must be at a low speed. For these reasons, a method for producing pellets with a good shape while improving a production speed has been needed.

To solve the above problems, an objective of the present invention is to provide a manufacturing method for water-containing EVOH pellets having a good shape, which can efficiently reduce water in a water-containing EVOH while preventing elution of EVOH.

### Solution to Problem

The above objective can be achieved by providing the followings.
[1] A manufacturing method for water-containing EVOH pellets, comprising
   a first step of introducing a water-containing EVOH with a water content W1 of 10 to 90 % by mass, into an extruder followed by melt kneading thereof, and a second step of cutting the water-containing EVOH extruded from the extruder to give water-containing EVOH pellets, wherein the extruder has a back slit; water is discharged through the back slit under reduced pressure by means of a pressure reducing device;
   a temperature of the water-containing EVOH extruded from the extruder is 80 to 120°C, and a water content W2 is 5 to 50 % by mass; and a ratio (W2/W1) of the water content W2 to the water content W1 is 0.2 or more and less than 1.
[2] The manufacturing method according to [1], wherein a pressure reduction degree by the pressure reducing device is -0.07 MPa to -0.005 MPa.
[3] The manufacturing methods according to [1] or [2], wherein a temperature of the water-containing EVOH introduced into the extruder is 80 to 130 °C.
[4] The manufacturing method according to any one of [1] to [3], wherein the extruder has no liquid discharge ports downstream of the inlet port for the water-containing EVOH.
[5] The manufacturing method according to any one of [1] to [4], wherein a screw rotating speed of the extruder is 10 to 2000 rpm.
[6] The manufacturing method according to any one of [1] to [5], further comprising introducing an EVOH solution containing 50 parts by mass or more of an alcohol with a boiling point of 100 °C or lower based on 100 parts by mass of an EVOH into a vessel; contacting the EVOH solution with water vapor in the vessel to let out the alcohol together with water vapor and to take the water-containing EVOH out of the vessel; and introducing the water-containing EVOH taken out of the vessel into the extruder.
[7] The manufacturing method according to any one of [1] to [6], wherein an ethylene unit content of the EVOH is 20 to 40 mol%.

### Advantageous Effects of Invention

According to such a manufacturing method, while suppressing elution of EVOH, water in the water-containing EVOH can be efficiently reduced that water-containing EVOH pellets can be produced with good productivity.

### Brief Description of Drawings

FIG. 1 shows a cylinder configuration and a screw configuration of a twin-screw extruder and an installation position of a pressure reducing device in Examples 1 to 11.
FIG. 2 shows a cylinder configuration and a screw configuration of a twin-screw extruder and an installation position of a pressure reducing device in Example 12.
FIG. 3 shows a cylinder configuration and a screw configuration of a twin-screw extruder in Comparative Example 1.
FIG. 4 shows a cylinder configuration and a screw configuration of a twin-screw extruder and an installation position of a pressure reducing device in Comparative Example 2.
FIG. 5 shows a cylinder configuration and a screw configuration of a twin-screw extruder in Comparative Example 3.
FIG. 6 shows a hot cutter configuration in Examples 1 to 12 and Comparative Examples 1 to 3.

### Description of Embodiments

The present invention relates to a manufacturing method for water-containing EVOH pellets, comprising a first step of introducing a water-containing EVOH with a water content W1 of 10 to 90 % by mass, into an extruder followed by melt kneading thereof, and a second step of cutting the water-containing EVOH extruded from the extruder to give water-containing EVOH pellets, wherein the extruder has a back slit; water is discharged through the back slit under reduced pressure by means of a pressure reducing device; a temperature of the water-containing EVOH extruded from the extruder is 80 to 120°C, and a water content W2 is 5 to 50 % by mass; and a ratio (W2/W1) of the water content W2 to the water content W1 is 0.2 or more and less than 1. According to the manufacturing method, while suppressing elution of EVOH, water in the water-containing EVOH can be efficiently reduced and thus water-containing EVOH pellets with a good shape can be produced with good productivity. In particular, the extruder having a back slit tends to be able to efficiently reduce water in the water-containing EVOH while suppressing elution of EVOH. Furthermore, by reducing pressure through the back slit by the pressure reducing device, deficient dewatering which may occur particularly when EVOH with a low ethylene unit content (for example, ethylene unit content of 20 to 40 mol%) is produced tends to be suppressed, giving water-containing EVOH pellets with a good shape.

Herein, a water-containing EVOH introduced into an extruder is sometimes referred to as a water-containing EVOH used in the present invention, and a water-containing EVOH extruded from an extruder is sometimes referred to as a water-containing EVOH obtained in the present invention.

A water-containing EVOH used in the present invention is preferably a paste containing EVOH and water. A water content W1 of the water-containing EVOH is 10 to 90 % by mass. As described later, the water-containing EVOH can contain other ingredients such as an alcohol and an alkaline metal salt.

EVOH constituting a water-containing EVOH used in the present invention (hereinafter, sometimes referred to as "EVOH used in the present invention" or "the EVOH") is generally obtained by saponifying an ethylene-vinyl ester copolymer. An ethylene content of the EVOH is preferably 20 to 60 mol%. If the ethylene content of the EVOH is 20 mol% or more, a water content of the water-containing EVOH fed into the extruder is reduced so that excessive reduction of a melt viscosity of the water-containing EVOH in the extruder can be easily prevented, resulting in further suppression of EVOH elution. The ethylene content is more preferably 23 mol% or more, further preferably 25 mol% or more. Meanwhile, if the ethylene content of the EVOH is 60 mol% or less, gas barrier properties is improved. The ethylene content is more preferably 50 mol% or less, further preferably 45 mol% or less, particularly preferably 40 mol% or less. In the light of efficiently reducing water in an EVOH by a pressure reducing device, the ethylene unit content of the EVOH is preferably 20 mol% or more and 40 mol% or less, more preferably 20 mol% or more and 35 mol% or less, further preferably 20 mol% or more and 33 mol% or less. If the ethylene unit content of the EVOH is more than 40 mol%, dewatering from a back slit is adequately effective for reducing water in the EVOH, so that improvement effect by the pressure reducing device tends to be less contributive. The ethylene content of the EVOH and a saponification degree are substantially unchanged at the end of a saponification process and at the end of a subsequent process described later, and are generally determined after all processes are finished.

A manufacturing method for the EVOH will be specifically described. As described above, the EVOH is generally prepared by saponifying an ethylene-vinyl ester copolymer. Copolymerization of ethylene with a vinyl ester can be any of solution polymerization, suspension polymerization, emulsion polymerization and bulk polymerization, or alternatively of a continuous or batch style. Exemplary solution polymerization conditions will be described below.

A solvent used is preferably an alcohol with a boiling point of 100 °C or lower, in the light of solubility of an ethylene-vinyl ester copolymer and EVOH, handleability and efficient substitution of water for an alcohol. Its boiling point is more preferably 80 °C or lower, further preferably 70 °C or lower.

Examples of an alcohol with a boiling point of 100 °C or lower include methanol, ethanol, n-propyl alcohol, iso-propyl alcohol and t-butyl alcohol, particularly preferably methanol.

Examples of initiators used in the polymerization include azonitrile initiators such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); and organic peroxide initiators such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide.

Examples of vinyl esters include fatty acid vinyl esters such as vinyl acetate, vinyl propionate, and vinyl pivalate, preferably vinyl acetate. EVOH can also contain 0.0002 to 0.2 mol% of a vinyl silane compound as a copolymerization component. Examples of vinyl silane compounds include vinyltrimethoxysilane, vinyltriethoxysilane, vinyltri(β-methoxy-ethoxy)silane, and γ-methacryloxypropylmethoxysilane. Among these, vinyl trimethoxy silane and vinyl triethoxy silane are preferably used.

Preferable polymerization conditions are as follows:
(1) Temperature: preferably 20 to 90 °C, more preferably 40 °C to 70 °C.
(2) Time (an average residence time in the case of a continuous style): preferably 2 to 15 hours, more preferably 3 to 11 hours.
(3) Polymerization rate: preferably 10 to 90%, more preferably 30 to 80%, based on the amount of vinyl ester charged.
(4) Resin content in the solution after polymerization: preferably 5 to 85% by mass, more preferably 20 to 70% by mass.

In addition to ethylene and a vinyl ester, the polymerization can involve a small amount of monomers copolymerizable with these, including α-olefins such as propylene, butylene, isobutylene, pentene, hexene, α-octene, and α-dodecene; ester-containing alkenes such as
3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene and 1,3-diacetoxy-2-methylenepropane; unsaturated acids and anhydrides, salts, mono- or dialkyl esters thereof such as acrylic acid, methacrylic acid, crotonic acid, maleic acid, and itaconic acid; nitriles such as acrylonitrile and methacrylonitrile; amides such as acrylamide and methacrylamide; olefin sulfonic acids or salts thereof such as ethylenesulfonic acid, allylsulfonic acid and methallylsulfonic acid; alkyl vinyl ethers; vinyl ketone; N-vinylpyrrolidone; vinyl chloride; and vinylidene chloride. A content of monomer units other than ethylene, a vinyl ester and a vinyl alcohol in the EVOH is preferably 20 mol% or less, and may be preferably 10 mol% or less, 5 mol %or less, 3 mol% or less, 1 mol% or less, or 0.1 mol% or less. The EVOH may not contain the other monomer units.

After the polymerization is allowed to proceed for a predetermined period of time until a predetermined polymerization rate is achieved, a polymerization inhibitor is, if necessary, added; the unreacted ethylene gas is removed by evaporation; and the unreacted vinyl ester is then expelled. The unreacted vinyl ester can be, for example, expelled by a method comprising feeding at a certain speed a polymerization solution after removal of ethylene from the top of a tower packed with Raschig rings while blowing vapor of an organic solvent, preferably an alcohol with a boiling point of 100 °C or lower, most preferably methanol from the bottom of the tower, to distill off mixed vapor of the organic solvent and the unreacted vinyl ester from the top of the tower while taking out a solution of the copolymer from which the unreacted vinyl ester has been removed, from the bottom of the tower.

An alkaline catalyst is added to the copolymer solution from which the unreacted vinyl ester has been removed, and the vinyl ester component in the copolymer is saponified. The saponification method can be either continuous or batchwise. Examples of the alkaline catalyst used include sodium hydroxide, potassium hydroxide, and an alkali metal alcoholate. A solvent used for saponification is preferably methanol. For example, the saponification conditions are as follows:
(1) Concentration of an ethylene-vinyl ester copolymer in a solution: 10 to 50 % by mass
(2) Reaction temperature: 30 to 150 °C
(3) Amount of a catalyst: 0.005 to 0.6 equivalents (based on a vinyl ester component)
(4) Time (for a continuous type, an average residence time): 10 minutes to 6 hours.

In general, when saponification is performed in a continuous style, methyl acetate generated by saponification can be more efficiently removed, so that a resin with a higher saponification degree can be provided with a smaller amount of catalyst than in a batch style. In addition, in the case of a continuous style, saponification must be performed at a higher temperature to prevent precipitation of the EVOH produced by saponification. Therefore, in the continuous style, a reaction temperature and a catalyst amount are preferably within the following ranges.

Reaction temperature: 70 to 150 °C.

Catalyst amount: 0.005 to 0.1 equivalents (based on a vinyl ester component).

A saponification degree of the EVOH obtained varies depending on its purposes, and is preferably 80 mol% or more of the vinyl ester component, and in the light of further improving gas barrier properties, is more preferably 95 mol% or more, further preferably 98 mol% or more, and particularly preferably 99 mol% or more. A saponification degree can be optionally adjusted, depending on the conditions.

As described above, when EVOH pellets having particularly excellent melt stability and good long-run properties are produced, a saponification degree of the EVOH is preferably 99.7 mol% or more, more preferably 99.8 mol% or more, further preferably 99.9 mol% or more, and particularly preferably 99.95 mol% or more, and in order to obtain such an EVOH, it is preferable to further adjust the saponification conditions as follows.

A continuous style is preferred as a method for producing an EVOH with a high saponification degree of 99.9 mol% or more. A method for achieving a high saponification degree in a continuous style include a method wherein a catalyst is added from multiple sites in a saponification reaction tower; a method wherein the amount of a catalyst is increased; and a method wherein the amount of methanol blown into the bottom of the saponification reaction tower is increased. Furthermore, a method for producing an EVOH with a high saponification degree of 99.9 mol% or more in a batch style include a method wherein a catalyst is added in a plurality of times; a method wherein the amount of a catalyst is increased; and a method wherein the amount of methanol vapor or nitrogen gas blown into the saponification reaction tank is increased.

Saponification provides a solution or paste containing an EVOH. The EVOH after the saponification reaction contains an alkali catalyst; by-product salts such as sodium acetate and potassium acetate; and other impurities, which may be, as necessary, removed by neutralization and washing. If the EVOH after the saponification reaction is washed with ion-exchanged water or the like which contains almost no metal ions, chloride ions, or the like, it is acceptable that some residual catalysts such as sodium acetate and potassium acetate remain in the EVOH.

As a post-treatment of the EVOH solution or paste after the saponification reaction, it is preferable that a mixed vapor of a solvent and water is supplied from the bottom of a tower vessel while the EVOH solution or paste is supplied from a position above the supply position of the mixed vapor, to partly replacing the solvent present in the supplied EVOH solution or paste with water to provide a high-concentration EVOH solution. A concentration of the EVOH in the EVOH solution supplied to the tower vessel is preferably 15 to 50 % by mass, more preferably 25 to 40 % by mass. It is also preferable that a ratio of the supply amount of the EVOH solution to the supply amount of the mixed vapor (solution supply amount/vapor supply amount) is 100/400 to 100/8 in a mass ratio. It is also preferable that a water content in the mixed vapor is 20 to 70 % by mass. A solvent used for the mixed vapor is preferably an alcohol having a boiling point of 130 °C or lower, and examples of such an alcohol include alcohols such as methanol, ethanol, propanol and butanol. Alcohols with a boiling point below 100 °C are more preferred, with methanol being the most preferred because it is readily available and inexpensive, and has a low boiling point and thus is easy to handle.

The EVOH solution or paste thus obtained usually contains 50 parts by mass or more of an alcohol with a boiling point of 100 °C or lower based on 100 parts by mass of the EVOH. An alcohol content is preferably 1000 parts by mass or less, more preferably 500 parts by mass or less. With the alcohol content being within this range, fluidity of the EVOH solution is ensured and a resin can be efficiently produced. The alcohol is preferably methanol. The EVOH solution after the saponification is not limited to an alcohol solution, and may be a solution in a mixed solvent to which other solvents such as water are, if necessary, added to the extent that EVOH does not precipitate.

As a method for preparing a water-containing EVOH used in the present invention, the above-mentioned production method preferably further comprises the steps of introducing an EVOH solution obtained as described above, containing 50 parts by mass or more of an alcohol having a boiling point of 100 °C or less based on 100 parts by mass of the EVOH while contacting the EVOH with water vapor in the vessel to let out the alcohol together with the water vapor and to take the water-containing EVOH out of the vessel, wherein the water-containing EVOH taken out of the vessel is introduced into an extruder described below. According to such a method, the alcohol in the EVOH solution can be efficiently replaced with water, and a water content and a temperature of the EVOH can be easily adjusted.

There are no particular restrictions to a method for contacting the EVOH solution introduced in the vessel with water-vapor in the vessel, and either a continuous or batch style can be employed. There are also no particular restrictions to a shape of the vessel, but a tower vessel and a tank vessel are preferable for a continuous style and a batch style, respectively. In the light of production efficiency, a continuous style is industrially preferable. Examples of tower-type vessels include a plate tower such as a perforated plate tower and a bubble cap tower, and a packed tower containing ring-type packings.

In a tower vessel, it is preferable that supply water vapor is supplied from the bottom of the vessel while an EVOH solution or paste is supplied from a position above the water vapor supply position, to let out the solvent (alcohol) present in the supplied EVOH solution or paste together with the water vapor, and to take a water-containing EVOH having a water content of 10 to 90% by mass out of the vessel. If the amount of water vapor introduced is too small, efficiency of removing the solvent (alcohol) is poor, and in contrast, if it is too large, it is disadvantageous in terms of cost, so that the amount of water vapor introduced is preferably 0.3 to 30 times by mass, more preferably 0.5 to 10 times by mass, and even more preferably 0.7 to 5 times by mass based on the mass of the EVOH solution or paste introduced. Water vapor brought into contact with the EVOH solution or paste can contain 10 parts by mass or less of the solvent (alcohol) based on 100 parts by mass of water vapor, but in the light of efficient removal of the solvent (alcohol), it is preferable that water vapor does not contain a solvent (alcohol). The water-containing EVOH can contain 0 to 10 parts by mass of the solvent (alcohol) based on 100 parts by mass of EVOH. Furthermore, the water-containing EVOH can contain residual saponification catalysts and the like.

The alcohol vapor and water vapor let out from the top of the tower are condensed in a condenser and recovered as an aqueous alcohol solution, which can be, as necessary, purified and reused. The EVOH solution or paste comes into direct contact with water vapor in the vessel, and a content of the solvent (alcohol) gradually decreases, while the EVOH is in a swollen paste state, and can be taken out of the vessel while retaining its fluidity and without gelling. An EVOH is dissolved in a methanol/water mixed solvent at normal pressure, for example at temperature of about 60 to 70 °C, but is not dissolved in water alone at a normal pressure. However, in the presence of pressurized water vapor at temperature of, for example, 90 °C or higher, an EVOH can maintain its fluidity even if it contains substantially water alone.

A temperature inside the vessel is preferably 100 to 150 °C. If the temperature inside the vessel is less than 100 °C, fluidity of the water-containing EVOH may be so insufficient that it may gelate or clog in the vessel. It is more preferably 110 °C or higher, further preferably 120 °C or higher. If the temperature inside the vessel is higher than 150 °C, an EVOH may be deteriorated. It is more preferably 140 °C or lower.

If a pressure inside the vessel is too low, an efficiency of alcohol removal may be lowered. The pressure inside the vessel is preferably 0.1 MPa or more, more preferably 0.15 MPa or more, and even more preferably 0.2 MPa or more. On the other hand, if the pressure inside the vessel is too high, a water content of the water-containing EVOH taken out of the vessel may become so high that a melt viscosity of the water-containing EVOH introduced into the extruder described below may become too low. Therefore, the pressure inside the vessel is preferably 0.6 MPa or less, more preferably 0.5 MPa or less, and further preferably 0.4 MPa or less.

After the EVOH solution is brought into contact with water vapor as described above, the water-containing EVOH is taken out of the vessel. This water-containing EVOH is suitably used as the water-containing EVOH to be supplied to an extruder in the first step described below.

In the first step, a water-containing EVOH having a water content W1 of 10 to 90 % by mass is introduced into an extruder and melt-kneaded. There are no particular restrictions to a form of the water-containing EVOH introduced into the extruder; for example, a paste. As described above, a water-containing EVOH paste is provided by directly contacting the EVOH solution with water vapor in a vessel. The EVOH is taken out of the vessel while maintaining its fluidity without gelling.

A water content W1 of the water-containing EVOH introduced into the extruder is 10 to 90% by mass. If the water content W1 is less than 10% by mass, a melt viscosity of the water-containing EVOH becomes so high that the water-containing EVOH cannot be extruded from the tip of the extruder and/or an elution amount of EVOH may increase. Furthermore, for ensuring fluidity, a melt temperature of the water-containing EVOH becomes high and thus the EVOH is degraded, resulting in deterioration of hue of the EVOH. The water content W1 is preferably 20 % by mass or more, more preferably 30 % by mass or more, further preferably 40 % by mass or more, particularly preferably 45 % by mass or more. If the water content W1 is more than 90 % by mass, a melt viscosity of the water-containing EVOH becomes so low that EVOH elution increases. The water content W1 is preferably 80 % by mass or less, more preferably 70 % by mass or less, further preferably 60 % by mass or less, particularly preferably 55 % by mass or less. The water content W1 of the water-containing EVOH introduced into the extruder is measured by the method described in Examples below. The water content W1 can be adjusted, for example, by the post-treatment conditions of the EVOH solution or paste and the conditions when the water-containing EVOH is prepared from the EVOH solution or paste.

A temperature of the water-containing EVOH to be supplied to the extruder is preferably 80 - 130 °C. With the temperature being within the above range, a melt viscosity of the water-containing EVOH is within an appropriate range, and the water-containing EVOH tends to be stably extruded from the tip of the extruder, and elution of the EVOH tends to be suppressed. The temperature is more preferably 90 °C or higher, further more preferably 95 °C or higher. The temperature is more preferably 125 °C or lower, further more preferably 115 °C or lower. The temperature of the water-containing EVOH can be adjusted, for example, by the conditions when a water-containing EVOH is prepared from an EVOH solution or paste.

In the light of protecting the working environment and the surrounding environment and of preventing the resulting water-containing EVOH pellets from sticking together, a content of alcohol having a boiling point of 100 °C or lower in the water-containing EVOH introduced into the extruder is preferably 10 mass% or less, more preferably 5 mass %or less, even more preferably 1 mass% or less, and particularly preferably 0.5 mass% or less.

The water-containing EVOH introduced into the extruder can contain, for example, about 0.1 to 5% by mass of an alkali metal salt in terms of a metal, which corresponds to the residual catalyst used in the saponification step, and can also contain by-product salts, other impurities and the like. A content of components other than EVOH, water, and an alcohol having a boiling point of 100 °C or lower in the water-containing EVOH supplied to the extruder is preferably 10% by mass or less, more preferably 5% by mass or less, further preferably 3% by mass or less, and particularly preferably 1% by mass or less.

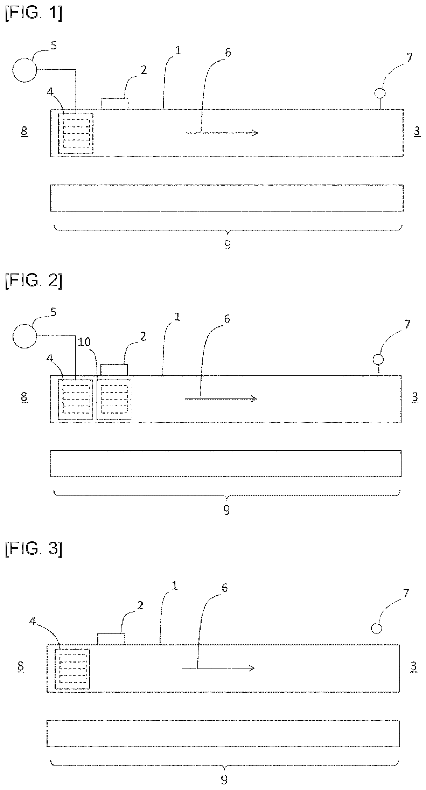

FIG. 1 shows a cylinder configuration (the upper part of FIG.1) and a screw configuration (the lower part of FIG.1) of an extruder used in Examples 1 or the like. The first step will be further described with reference to FIG. 1.

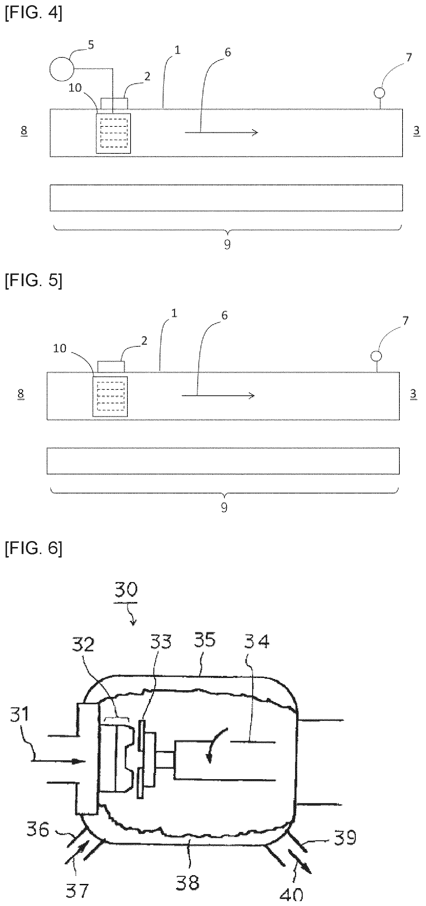

The extruder used in the first step can be a single-screw extruder or a multi-screw extruder, but a twin-screw extruder is preferred. An L/D of the extruder is preferably 8 to 30, more preferably 9 to 25, and even more preferably 10 to 20. A block cylinder or the like is generally used as cylinder 1. The cylinder 1 of the extruder has an inlet port 2 for a water-containing EVOH, and after the water-containing EVOH is introduced via the inlet port 2, the water-containing EVOH flows along the axis of the cylinder 1 to the tip side (downstream side 3) of the cylinder 1 by rotation of a screw disposed in the cylinder 1. Here, water in the water-containing EVOH is discharged via a liquid discharge port (back slit 4) disposed in the cylinder 1 while pressure is reduced through the liquid discharge port by a pressure reducing device 5, thereby reducing a water content of the water-containing EVOH. Thus, the extruder used in the first step has a back slit 4, and water in the water-containing EVOH is discharged via the back slit 4 under the reduced pressure by the pressure reducing device 5, which is a major characteristic of the present invention. The back slit 4 is a drainage slit (liquid discharge port) disposed upstream side 8 of the flow 6 of the water-containing EVOH from the inlet port 2 for the water-containing EVOH. Conventionally, a drainage slit (liquid discharge port 10) of an extruder has been disposed below the inlet port 2 (FIG. 5) or downstream side 3 of the flow 6 of the water-containing EVOH from the inlet port 2. However, during continuous operation, EVOH elution marks are left on the liquid discharge port 10, and if it is left for a long period of time, the liquid discharge port 10 may be clogged, which may adversely affect production, and therefore periodic cleaning is required. As a result of intensive studies for producing water-containing EVOH pellets while suppressing generation of EVOH elution marks, we have surprisingly found that by providing the above-mentioned back slit 4 in the cylinder 1 and draining water from there, elution of EVOH into discharged water is suppressed. In addition, since EVOH is hydrophilic, when a water-containing EVOH with a low ethylene unit content (for example, an ethylene unit content of 20 mol% to 40 mol%), water in the water-containing EVOH cannot be sufficiently reduced, and when cutting the water-containing EVOH extruded from an extruder, cutting defects sometimes occur. Cutting defect refers to the fact that the water-containing EVOH cannot be cut due to a low melt viscosity of the water-containing EVOH with a high water content, and water-containing EVOH pellets with a shape wherein continuous pellets are connected each other and/or the pellets with a length of several centimeters are produced. If operation is continued with a large amount of water-containing EVOH pellets with cutting defects, a transfer pump and piping may be clogged during transferring the water-containing EVOH pellets, which may adversely affect production, leading to necessity of reducing a production speed. As a result of intensive studies for producing water-containing EVOH pellets having a good shape while suppressing generation of EVOH elution marks and cutting defects, we have found that the back slit 4 is equipped with the pressure reducing device 5 for reducing the pressure, which allows for producing water-containing EVOH pellets with a good shape while suppressing elution of EVOH into discharged water.

When the extruder is viewed in a plan view perpendicular to the axis of the cylinder 1, it is preferable that the back slit 4 is disposed upstream side 8 of flow 6 of the water-containing EVOH from the inlet port 2 of the water-containing EVOH, and the inlet port 2 and the back slit 4 do not overlap, that is, the most downstream side 3 of the back slit 4 is disposed upstream of the most upstream side 8 of the inlet port 2. It is also preferable that the extruder does not have a liquid discharge port 10 downstream of the inlet port 2 of the water-containing EVOH, and it is more preferable that the extruder does not have a liquid discharge port 10 other than the back slit 4. When the extruder does not have a liquid discharge port 10 other than the back slit 4, elution of EVOH tends to be more suppressed. There are no particular restrictions to the type of the back slit 4 used in the present invention, and common dewatering slits can be used; specifically, a wedge wire type dewatering slit, a screen mesh type dewatering slit, or the like can be used.

The back slit 4 of the extruder is provided with the pressure reducing device 5 for reducing pressure through the back slit 4. By reducing pressure through the back slit 4 by the pressure reducing device 5, a water content of the water-containing EVOH can be efficiently reduced while suppressing elution of the EVOH, and cutting defects tend to be reduced particularly when cutting a water-containing EVOH with a low ethylene unit content (for example, an ethylene unit content of 20 mol% to 40 mol%). A pressure reduction degree at the back slit 4 is preferably -0.07 MPa to -0.005 MPa. Here, the pressure reduction degree is a gauge pressure that means a difference from the atmospheric pressure, and the degree of reduction in pressure relative to the atmospheric pressure which is expressed as a negative numerical value, with the atmospheric pressure being zero. Therefore, "a large pressure reduction degree" means that the absolute value of this negative numerical value is large. If the pressure reduction degree is too small, water reduction in the water-containing EVOH is reduced, leading to tendency to cutting defects. The pressure reduction degree at the back slit 4 is, therefore, preferably -0.005 MPa or less, and may be -0.015 MPa or less. On the other hand, if the pressure reduction degree is too high, elution of EVOH increases. The pressure reduction degree of the back slit 4 is, therefore, preferably -0.07 MPa or more, more preferably -0.055 MPa or more, further preferably -0.04 MPa or more, and may be -0.025 MPa or more. There are no particular restrictions to the type of a pressure reducing device used in the present invention; for example, a vacuum pump, an aspirator, and an ejector.

A cylinder temperature of the extruder is preferably 70 to 110 °C. With a cylinder temperature being within this range, EVOH elution is further suppressed and water-containing EVOH pellets with a good shape can be produced. The temperature is preferably 105 °C or lower, more preferably 100 °C or lower, further preferably 95 °C or lower. Here, the cylinder temperature is the maximum temperature at a downstream side of the water-containing EVOH inlet port 2.

A screw of the extruder can be of a segment type. A screw rotating speed is preferably 10 to 2000 rpm. With the screw rotating speed being within such a range, elution of the EVOH is further suppressed and water-containing EVOH pellets with a good shape can be produced. The screw rotating speed is more preferably 50 rpm or more, further preferably 120 rpm or more, even more preferably 150 rpm or more, particularly preferably 200 rpm. Meanwhile. the screw rotation speed is more preferably 1500 rpm or less, further preferably 1000 rpm or less, even more preferably 800 rpm, particularly preferably 500 rpm. When the pressure is further reduced through the back slit 4 by the pressure reducing device 5, the screw rotating speed increases to improve a production speed, so that EVOH elution tends to be suppressed. In contrast, when the pressure is not sufficiently reduced through the back slit 4, cutting ability tends to be improved by lowering the screw rotating speed to reduce a production speed.

A water content W2 of the water-containing EVOH extruded from the extruder needs to be 5 to 50% by mass. If the water content W2 is less than 5 % by mass, a melt viscosity of the water-containing EVOH is too high, so that the water-containing EVOH cannot be extruded from the tip of the extruder, and/or EVOH elution increases. The water content W2 is preferably 10 % by mass or more, more preferably 20 % by mass or more, further preferably 30 % by mass or more. Meanwhile, if the water content W2 is more than 50 % by mass, a melt viscosity of the water-containing EVOH is too low, so that EVOH elution increases and cutting defects occur. The water content W2 is preferably 45 % by mass or less, more preferably 40 % by mass or less.

In the present invention, a ratio (W2/W1) of a water content W2 of the water-containing EVOH extruded from the extruder to a water content W1 of the water-containing EVOH introduced into the extruder must be 0.2 or more and less than 1. With the ratio (W2/W1) being within such a range, EVOH elution is further suppressed, and water-containing EVOH pellets having a good shape are produced. The ratio (W2/W1) is preferably 0.3 or more, more preferably 0.4 or more, further preferably 0.5 or more, even more preferably 0.55 or more, particularly preferably 0.6 or more. Meanwhile, the ratio (W2/W1) is preferably 0.9 or less, more preferably 0.85 or less, further preferably 0.8 or less, even more preferably 0.75 or less, particularly preferably 0.7 or less. The water content W2 can be adjusted by, for example, the water content W1, a cylinder temperature, a screw rotation speed and the like. Furthermore, as described above, the water content W2 can be adjusted by providing a back slit and further discharging water under reduced pressure by a pressure reducing device.

A temperature of the water-containing EVOH extruded from the extruder must be 80 to 120 °C. If the temperature is lower than 80 °C, a melt viscosity of the water-containing EVOH becomes too high to be extruded from the tip of the extruder, and/or EVOH elution increases. The temperature is preferably 85 °C or higher. Meanwhile, if the temperature is higher than 120 °C, a melt viscosity of the water-containing EVOH becomes so low that EVOH elution increases and/or cutting defects may occur. The temperature is preferably 115 °C or lower, more preferably 110 °C or lower, even more preferably 100 °C or lower, particularly preferably 93 °C or lower. The temperature and the water content W2 of the water-containing EVOH extruded from the extruder are measured as described in EXAMPLES.

In the light of further suppressing elution of an EVOH and providing water-containing EVOH pellets having a good shape, it is preferable that a temperature of the water-containing EVOH introduced into the extruder is higher than a temperature of the water-containing EVOH extruded from the extruder. It is more preferable that a temperature of the water-containing EVOH introduced into the extruder is higher by 1 °C or more, further preferably 5 °C or more, particularly preferably by 10 °C or more than a temperature of the water-containing EVOH extruded from the extruder.

In the second step, the water-containing EVOH extruded from the extruder is cut to provide water-containing EVOH pellets. There are no particular restrictions to the method, including a method wherein the water-containing EVOH (molten state) extruded from the extruder are directly cut; and a method wherein the water-containing EVOH extruded from the extruder is extruded into a solidifying liquid in the form of a strand, solidified, and then cut. Among these, a method of directly cutting the water-containing EVOH is preferred. As a method of directly cutting the water-containing EVOH extruded from the extruder, a hot cutting method, an underwater cutting method or the like is employed. Preferably used is the cutting method of the water-containing EVOH composition obtained in step 1 described in Patent Literature 1. In the light of handleability of the water-containing EVOH pellets, a nozzle diameter is preferably 2 to 5 mmφ (φ is diameter, the same applies below). For a size of the water-containing EVOH pellets produced, a diameter can be 1 mm or more and 10 mm or less for a spherical (or substantially spherical) shape, and a diameter and a length can be 1 mm or more and 10 mm or less, respectively, for a cylindrical shape. Cylindrical pellets are obtained when the EVOH is extruded into a strand shape, solidified and then cut. Spherical (or substantially spherical) pellets are obtained when they are directly cut in a molten state. This method of cutting water-containing EVOH in a molten state is superior in productivity because it does not require consideration of a take-up speed at which strands can be stably formed, compared with a method of extruding it into a solidifying liquid in a strand shape, and solidifying and then cutting it. For example, even in the case of an EVOH with a low ethylene content, where it is not easy to form strands, water-containing EVOH pellets can be easily produced by cutting in a molten state.

The method wherein the water-containing EVOH is extruded into a strand shape, solidified, and then cut, includes a method wherein the water-containing EVOH is extruded into a solidifying liquid into a strand shape. The solidifying liquid is water, but it can contain a small amount of an alcohol. A temperature of the solidifying liquid is preferably 0 to 50 °C, and a temperature of the water-containing EVOH during extrusion is 80 to 120 °C. This temperature difference allows the water-containing EVOH to be solidified in a short period of time. A temperature of the solidifying liquid is preferably 0 to 30 °C. The solidified strand is cut into pellets by a cutter. The cutter is preferably a strand cutter.

The water-containing EVOH is extruded into the solidifying liquid in a strand shape by a nozzle with any shape. There are no particular restrictions to a shape of such a nozzle, and a cylindrical shape is preferable. Thus, the water-containing EVOH is extruded from the nozzle as a strand. Here, the strand does not necessarily have to be a single strand, and any number between several and several hundred strands can be extruded. Subsequently, the EVOH extruded in a strand form is cut after sufficient coagulation has progressed, to provide water-containing EVOH pellets. Then, if necessary, the pellets can be washed as described below. A size of such pellets may be, for example, 1 mm or more and 10 mm or less in diameter and 1 mm or more and 10 mm or less in length for a cylindrical shape, and 1 mm or more and 10 mm or less in diameter for a spherical shape.

Before drying the water-containing EVOH pellets thus obtained, if necessary, they may be washed, or additives can be added. Methods for washing and adding additives can be the methods described in Patent Literature 1, which are employed for pellets of a water-containing EVOH composition obtained in process 1 therein. In addition, before drying, the water-containing EVOH pellets can be melt-kneaded again in an extruder, and then cut into pellets. Here, the melt-kneading method, the cutting method, and the drying method for the pellets obtained can be the melt-kneading method in step 2, the pelletizing method for the EVOH resin obtained in step 2, and the drying method for the obtained pellets, each described in Patent Literature 1.

A melt flow rate (MFR) (210 °C, load: 2160 g) of the EVOH resin composition pellets obtained using the water-containing EVOH pellets is preferably 0.1 to 200 g/10 min, more preferably 0.5 to 50 g/10 min, and even more preferably 1 to 30 g/10 min. When the MFR is 0.1 g/10 min or more, moldability tends to be improved, and when the MFR is 200 g/10 min or less, mechanical properties of the molded product obtained tend to be improved. The MFR is measured as described in EXAMPLES below.

The EVOH thus obtained can be melt-molded into various molded articles for a variety of applications such as films, sheets, vessels, pipes and fibers. According to the manufacturing method of the present invention, productivity of such EVOH can be improved.

### Examples

The present invention will be more specifically described with reference to examples.

### [Evaluation method]

### (1) Measurement of water content

Using 3 g of the water-containing EVOH and the water-containing EVOH pellets obtained in the Examples and Comparative Examples, a water content of the water-containing EVOH and the water-containing EVOH pellets were measured using a METTLER halogen moisture analyzer "HR73" at a drying temperature of 180 °C and a drying time of 15 minutes.

### (2) Evaluation of cutting properties

100 g of water-containing EVOH pellets obtained in Examples and Comparative Examples were used, and a mass of water-containing EVOH pellets with a length of more than 2 cm was measured, and its rate was calculated as an uneven cutting rate. Evaluation was performed according to the following evaluation criteria. Operatability means transportability after cutting. When evaluation was A to C, it was determined that there were no problems with cutting ability.
A: Uneven cutting was less than 5%, and drivability was good.
B: Uneven cutting was 5% or more and less than 30%, and operation was possible.
C: Uneven cutting was 30% or more and less than 50%, and operation was possible.
D: Uneven cutting was 50% or more, and operation was unstable.

### (3) Evaluation of EVOH elution

Water-containing EVOH pellets were continuously produced according to the methods described in Examples and Comparative Examples, and the presence of white EVOH elution marks on the liquid discharge port of the twin-screw extruder was visually observed, and evaluated according to the following evaluation criteria. It is believed that the EVOH elution marks on the liquid discharge port are caused by EVOH eluted in water taken. When evaluation was A to C, it was determined that elution of the EVOH was suppressed.
A: Even after 10 days or more of continuous operation, no EVOH elution marks were found at the liquid discharge port.
B: After continuous operation for 7 days or more and less than 10 days, EVOH elution marks were observed at the liquid discharge port.
C: After continuous operation for 5 days or more and less than 7 days, EVOH elution marks were observed at the liquid discharge port.
D: After less than 5 days of continuous operation, EVOH elution marks were observed at the liquid discharge port.

### (4) Melt flow rate (MFR)

The water-containing EVOH pellets obtained in Examples and Comparative Examples were added to ion-exchanged water (bath ratio 20), washed with stirring for 2 hours, and deliquored, and this operation was repeated three times. The deliquored pellets were centrifuged to remove surface water. The water-containing pellets, which had a moisture content of 33% by mass after centrifugation, were loaded into a twin-screw extruder shown below, and melt-kneaded under the following conditions while the resin temperature at the extrusion port was set to 100 °C and a treatment liquid consisting of an aqueous solution of acetic acid/sodium acetate/phosphoric acid was added from the trace component addition port at the tip of the extrusion port side. The amount of EVOH fed per unit time was 10 kg/hr (including a mass of water contained), the amount of the treatment liquid fed per unit time was 0.67 L/hr, and the composition of the treatment liquid was an aqueous solution containing 6.7 g/L of acetic acid, 11.3 g/L of sodium acetate, and 1 g/L of phosphoric acid.

### (Twin-screw extruder conditions)

- Apparatus: 30 mmΦ twin-screw extruder
- L/D: 45.5
- Screw: corotation intermeshing type
- Screw rotation speed: 300 rpm
- Cylinder temperature: 100 °C
- Die temperature: 105 °C
- Number of die holes: 5 holes (3 mmΦ)

The molten EVOH resin extruded from the twin-screw extruder was then cut by a hot cutter to obtain substantially spherical pellets. The substantially spherical pellets had a water content of 20% by mass. The pellets obtained were dried under a nitrogen stream at 90 °C for 15 hours and at 105 °C for 15 hours to obtain substantially spherical EVOH pellets (water content: 0.3% by mass) with a short diameter of 2.7 mm and a long diameter of 3.7 mm.

An MFR of the EVOH pellets obtained above was measured in accordance with the method described in JIS K 7210:2014. Specifically, the EVOH pellets were filled into a cylinder of Melt Indexer L244 (manufactured by Takara Industry Co., Ltd.) with an inner diameter of 9.55 mm and a length of 162 mm, and molten at 210 °C. Then, a load was evenly applied to the molten resin composition using a plunger with a mass of 2,160 g and a diameter of 9.48 mm. The amount of the resin composition extruded per unit time (g/10 min) from an orifice with a diameter of 2.1 mm formed in the center of the cylinder was measured.

### (5) Measurement of an alcohol content

Five grams of the water-containing EVOH used in Examples and Comparative Examples was freeze-pulverized in liquid nitrogen, and immediately after pulverization, a sample (about 500 mg) was taken in an HSS vial and analyzed for methanol under the following conditions. Two measurements were performed for each sample, and an alcohol content was calculated from the average.
- Headspace (HSS) - GC/MS
- Oven temperature: 120 °C (MHE method: [120 °C x 30 min] x 5 times)
- Loop temperature: 200 °C
- Transfer temperature: 200 °C, with shaking GC/MS
- Column: DB-WAXetr (30 m-0.25 mm-0.5 µm)
- Oven: 50 °C (hold for 5 minutes) → 10 °C/min → 200 °C (hold for 10 minutes)
- Injection port: 230 °C (split ratio: 20:1)
- Measurement mode: SIM (m / z = 31)

### (Example 1)

An EVOH solution containing 100 parts by mass of EVOH with an ethylene unit content of 27 mol% and a saponification degree of 99.98 mol%, 55 parts by mass of methanol, and 45 parts by mass of water was continuously fed into a 10-plate tower with a tower diameter of 0.3 m from the top of the tower, and water vapor was blown in from the bottom to bring the EVOH solution into countercurrent contact with the water vapor. A temperature in the tower was 130 °C, and a pressure in the tower was 0.3 MPa. The water-containing EVOH obtained by countercurrently contacting with water vapor was taken out of the bottom of the tower. A temperature of the water-containing EVOH obtained was 120 °C, and a water content (W1) measured according to the above evaluation method was 54.5% by mass. An alcohol content was 0.05% by mass. The results are shown in Table 1.

The obtained water-containing EVOH with a water content (W1) of 54.5% by mass was fed at 42 kg/hr to a twin-screw extruder having a liquid discharge port (back slit 4) located upstream 8 of the inlet port 2 of the water-containing EVOH, as shown in Figure 1, with a resin temperature of 110 °C. To reduce pressure through the back slit 4, a vacuum pump was connected to the back slit 4 via piping as the pressure reducing device 5, and the pressure was reduced to the pressure reduction degree of -0.02 MPa. Extrusion was performed under the following conditions from a die with eight holes and a pore diameter of 30 mm attached to the tip of the extruder, and the molten material was cut at a distance of 0.05 mm from the die by a hot cutter with two blades (Figure 6) to obtain flat spherical water-containing EVOH pellets. A temperature of the resin at this time was 95 °C, and a water content (W2) measured according to the above evaluation method was 36% by mass. A resin temperature was measured by a temperature sensor in contact with the molten material, which was disposed near the extrusion outlet at the tip of the cylinder. Water-containing EVOH pellets were continuously produced under the above conditions, and elution of EVOH into water let out from the twin-screw extruder was evaluated according to the above evaluation method. In addition, the cutting ability and MFR of some of the obtained water-containing EVOH pellets were determined according to the above evaluation method. These results are shown in Table 1. A flow rate of the cutter circulating water was 300 liters/min, and a rotation speed of the cutter blade was 3000 rpm. Furthermore, the obtained water-containing EVOH pellets were added into ion-exchanged water (bath ratio 20) and washed with stirring for 2 hours, and the deliquoring operation was repeated three times. The deliquored pellets were centrifuged to remove surface water, and then dried at 95 °C for 3 hours under a nitrogen stream with an oxygen concentration of 1 volume% by mass or less to obtain dried resin composition pellets with a water content of 0.5 % by mass.

### <Twin-screw extruder conditions>

L/D: 14
Aperture: 30 mm
Screw: full flight
Rotation speed: 200 rpm
Cylinder temperature: 90 °C (maximum temperature at the downstream side of the inlet port 2 of the water-containing EVOH)
Die temperature: 120 °C
Number of die holes: 8

### (Examples 2 to 12 and Comparative Examples 1 to 3)

Water-containing EVOH pellets were produced and evaluated as described in Example 1, except that the conditions were adjusted such that an ethylene unit content, a temperature and a water content W1 of the resin supplied to the extruder, a pressure reduction degree of the pressure reducing device, arrangement of the liquid discharge port and arrangement of the pressure reducing device, a screw rotating speed, and a temperature and a water content W2 of the resin extruded from the extruder were as shown in Table 1. The results are shown in Table 1. FIG. 2 shows a cylinder configuration of the twin-screw extruder in Example 12, and the twin-screw extruder in Example 12 has a liquid discharge port (back slit 4) disposed upstream 8 of the inlet port 2 for the water-containing EVOH, and a liquid discharge port 10 disposed downstream of the inlet port 2 of the water-containing EVOH, and the pressure reducing device 5 is disposed such that the pressure is reduced through the back slit 4. FIG. 3 shows a cylinder configuration of the twin-screw extruder in Comparative Example 1, and the twin-screw extruder in Comparative Example 1 has a liquid discharge port (back slit 4) disposed upstream 8 of the inlet port 2 for the water-containing EVOH. FIG. 4 shows a cylinder configuration of the twin-screw extruder in Comparative Example 2, which has a liquid discharge port 10 disposed downstream of the inlet port 2 for the water-containing EVOH, and the pressure reducing device 5 is disposed such that the pressure is reduced through the liquid discharge port 10 downstream of the inlet port 2 of the water-containing EVOH. FIG. 5 shows a cylinder configuration of the twin-screw extruder in Comparative Example 3, which has a liquid discharge port 10 disposed downstream of the inlet port 2 for the water-containing EVOH.

**[Table 1]**

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 |
|---|---|---|---|---|---|---|---|---|---|---|---|---|---|---|---|---|---|
| EVOH ¹⁾ | Ethylene unit content | mol% | 27 | 27 | 27 | 27 | 27 | 27 | 24 | 32 | 27 | 27 | 27 | 27 | 27 | 27 | 27 |
| | Saponification degree | mol% | 99.98 | 99.98 | 99.98 | 99.98 | 99.98 | 99.99 | 99.98 | 99.98 | 99.98 | 99.98 | 99.98 | 99.98 | 99.98 | 99.98 | 99.98 |
| | Resin temperature | °C | 120 | 120 | 120 | 120 | 110 | 120 | 120 | 120 | 120 | 105 | 125 | 120 | 120 | 120 | 120 |
| | Alcohol content | % by mass | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | Water content W1 | % by mass | 54.5 | 54.5 | 54.5 | 54.5 | 54.5 | 54.5 | 54.5 | 64.5 | 54.5 | 43.0 | 64.5 | 54.5 | 54.5 | 54.5 | 54.5 |
| Extruder | Resin temperature (Inlet) | °C | 110 | 110 | 110 | 110 | 110 | 110 | 110 | 110 | 110 | 110 | 110 | 110 | 110 | 110 | 110 |
| | Slit disposition ²⁾ | - | X | X | X | X | X | X | X | X | X | X | X | X,Y | X | Y | Y |
| | Pressure reduction degree | MPa | -0.02 | -0.006 | -0.03 | -0.02 | -0.01 | -0.03 | -0.02 | -0.02 | -0.05 | -0.02 | -0.07 | -0.02 | - | -0.02 | - |
| | Cylinder temperature | °C | 90 | 90 | 90 | 90 | 90 | 90 | 90 | 90 | 90 | 90 | 90 | 90 | 90 | 90 | 90 |
| | Screw rotation speed | rpm | 200 | 200 | 200 | 300 | 150 | 300 | 200 | 200°°° | 200 | 150 | 200 | 200 | 200 | 200 | 200 |
| | Production speed | kg/hr | 42 | 42 | 42 | 63 | 31.5 | 63 | 42 | 42 | 42 | 31.5 | 42 | 42 | 42 | 42 | 42 |
| | Resin temperature (outlet) | °C | 95 | 95 | 95 | 95 | 95 | 95 | 95 | 95 | 95 | 95 | 95 | 95 | 95 | 95 | 95 |
| | Water content W2 | % by mass | 36 | 41 | 34 | 37 | 37 | 35 | 38 | 33 | 32 | 27 | 27 | 36 | 43 | 40 | 48 |
| Evaluation | W2/W1 | - | 0.66 | 0.75 | 0.62 | 0.68 | 0.68 | 0.64 | 0.70 | 0.51 | 0.59 | 0.63 | 0.42 | 0.66 | 0.79 | 0.66 | 0.88 |
| | Cutting ability | - | A | C | A | A | A | A | B | A | A | A | A | A | D | C | D |
| | EVOH elution | - | A | A | B | A | A | A | B | B | C | B | C | C | C | D | D |
| | MFR | g/10 min | 8.9 | 8.9 | 8.9 | 8.9 | 8.9 | 8.9 | 2.2 | 10 | 8.9 | 8.9 | 8.9 | 8.9 | 8.9 | 8.9 | 8.9 |

| | | | | | | | | | | | | | | | | | |
|---|---|---|---|---|---|---|---|---|---|---|---|---|---|---|---|---|---|
| 1) Water-containing EVOH fed to an extruder 2) X: Upstream of the inlet port (back slit), Y: Downstream of the inlet port | | | | | | | | | | | | | | | | | |

From comparison of Examples 1 to 9 and Comparative Examples 1 to 2, it can be seen that when the pressure is reduced through the back slit of the extruder by a vacuum pump, elution of EVOH into water let out from the extruder was suppressed, cutting ability of the water-containing EVOH was good, and water-containing EVOH pellets with a good shape were obtained. More specifically, from comparison of Examples 1 to 3, 9 and 11, it can be seen that cutting ability and suppression of elution of EVOH are excellent when the pressure reduction degree by the pressure reducing device is relatively large, cutting ability is affected when the pressure reduction degree is small, and elution of EVOH is affected when the pressure reduction degree is large. From comparison of Examples 1 to 3, 9, and 11, it can be seen that when a ratio (W2/W1) is within a predetermined range, cutting ability and suppression of elution of EVOH are excellent, elution of EVOH is affected when the ratio (W2/W1) is small, and cutting ability is affected when the ratio (W2/W1) is large. In addition, from comparison of Example 2 and Example 5, it can be seen that when the pressure reduction degree is low, cutting ability is improved by reducing a production speed. Meanwhile, from comparison of Example 3 and Example 6, it can be seen that when the pressure reduction degree is high, elution of EVOH can be suppressed by increasing a production speed. From comparison of Examples 1, 7, and 8, it can be seen that cutting ability and suppression effects of elution of EVOH are exhibited even if an ethylene unit content changes. From comparison of Examples 1, 2, and 10, it can be seen that when the water content W2 is within a predetermined range, cutting ability and suppression of elution of EVOH are excellent, and when the water content W2 is high, cutting ability is affected. From comparison of Example 1 and Example 12, it can be seen that when a liquid discharge port is disposed downstream of the inlet of the water-containing EVOH in addition to the back slit, it affects elution of EVOH. From comparison of Example 1 and Comparative Example 1, it can be seen that when the pressure is not reduced through the back slit, cutting ability is deteriorated and effects of suppressing elution of EVOH also tends to decrease. From comparison of Example 1 and Comparative Example 2, it can be seen that when the pressure is reduced through a liquid discharge port located downstream of the water-containing EVOH inlet other than a back slit, elution of EVOH cannot be suppressed and cutting ability is deteriorated. From comparison of Comparative Example 1 and Comparative Example 3, it can be seen that elution of EVOH can be suppressed by using an extruder having a back slit compared to the case of using an extruder equipped with a liquid discharge port other than a back slit.

### Reference Signs List

1: Cylinder
2: Inlet port
3: Downstream side
4: Back slit
5: Pressure reducing device
6. Flow of a water-containing EVOH
7: Temperature sensor
8: Upstream side
9: Full flight screw
10: Liquid discharge port
30: Hot cutter
31: Molten material supply port
32: Die
33: Rotary blade
34: Rotation axis
35: Cutter box
36: Cooling water supply port
37: Cooling water
38: Water film
39 Pellet discharge port
40: Cooling water and pellets

## Claims

1. A manufacturing method for water-containing ethylene-vinyl alcohol copolymer pellets, comprising
a first step of introducing a water-containing ethylene-vinyl alcohol copolymer with a water content W1 of 10 to 90 % by mass, into an extruder followed by melt kneading thereof, and
a second step of cutting the water-containing ethylene-vinyl alcohol copolymer extruded from the extruder to give water-containing ethylene-vinyl alcohol copolymer pellets, wherein
the extruder has a back slit; water is discharged through the back slit under reduced pressure by means of a pressure reducing device;
a temperature of the water-containing ethylene-vinyl alcohol copolymer extruded from the extruder is 80 to 120°C, and a water content W2 is 5 to 50 % by mass; and
a ratio (W2/W1) of the water content W2 to the water content W1 is 0.2 or more and less than 1.

2. The manufacturing method according to Claim 1, wherein a pressure reduction degree by the pressure reducing device is -0.07 MPa to - 0.005 MPa.

3. The manufacturing methods according to Claim 1 or 2, wherein a temperature of the water-containing ethylene-vinyl alcohol copolymer introduced into the extruder is 80 to 130 °C.

4. The manufacturing method according to any one of Claims 1 to 3, wherein the extruder has no liquid discharge ports downstream of the inlet port for the water-containing ethylene-vinyl alcohol copolymer.

5. The manufacturing method according to any one of Claims 1 to 4, wherein a screw rotating speed of the extruder is 10 to 2000 rpm.

6. The manufacturing method according to any one of Claims 1 to 5, further comprising introducing an ethylene-vinyl alcohol copolymer solution containing 50 parts by mass or more of an alcohol with a boiling point of 100 °C or lower based on 100 parts by mass of an ethylene-vinyl alcohol copolymer into a vessel; contacting the ethylene-vinyl alcohol copolymer solution with water vapor in the vessel to let out the alcohol together with water vapor and to take the water-containing ethylene-vinyl alcohol copolymer out of the vessel; and introducing the water-containing ethylene-vinyl alcohol copolymer taken out of the vessel into the extruder.

7. The manufacturing method according to any one of Claims 1 to 6, wherein an ethylene unit content of the ethylene-vinyl alcohol copolymer is 20 to 40 mol%.
